(19) Europäisches Patentamt
European Patent Office
Office européen des brevets

(11) EP 2 878 709 A1

(12) **EUROPEAN PATENT APPLICATION**

(43) Date of publication:
**03.06.2015 Bulletin 2015/23**

(51) Int Cl.:
***C25B 1/00*** *(2006.01)* ***C01B 31/04*** *(2006.01)*

(21) Application number: **13194792.1**

(22) Date of filing: **28.11.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
- **BASF SE**
  **67056 Ludwigshafen (DE)**
- **Max-Planck-Gesellschaft zur Förderung der Wissenschaften e.V.**
  **80539 München (DE)**

(72) Inventors:
- **Kurkina, Tetiana**
  **67433 Neustadt (DE)**
- **Feng, Xinliang, Feng, Prof. Dr.**
  **55122 Mainz (DE)**
- **Parvez, Khaled**
  **55131 Mainz (DE)**

(74) Representative: **Haggenmüller, Christian**
**Maiwald Patentanwalts GmbH**
**Elisenhof**
**Elisenstraße 3**
**80335 München (DE)**

(54) **Preparation of two dimensional carbon materials by electrochemical exfoliation**

(57) The present invention relates to a process for preparing graphene by electrochemical exfoliation, which comprises:
- providing a first electrode E1 and a second electrode E2, wherein at least the first electrode E1 comprises a carbon starting material having a layered structure;
- bringing at least the first electrode E1 in contact with a liquid electrolyte,
wherein the liquid electrolyte comprises
- an ammonium cation, and
- an inorganic sulphur-containing anion,

- applying an electric potential between the first electrode E1 and the second electrode E2 so as to exfoliate graphene from the carbon starting material.

EP 2 878 709 A1

## Description

The present invention relates to a process for preparing graphene by electrochemical exfoliation and to use graphene obtained from said process. The present invention also relates to the preparation of layered assemblies using the electrochemically exfoliated graphene.

Graphene, a two-dimensional (2D) honeycomb $sp^2$ carbon lattice, has received extensive attention due to its unique chemical, mechanical and electrical properties. These properties make it a promising material for next-generation nanoelectronics, composite materials, sensors, batteries, supercapacitors etc. However, the large-scale production of high quality, solution processable graphene *via* a simple low-cost method remains a major challenge.

Several methods have been developed to produce graphene since its discovery. Among them, mechanically exfoliated and epitaxially grown graphene exhibit high quality but only produce a limited quantity of materials for fundamental research. Chemical vapor deposition (CVD) methods using catalytic metal substrates such as Ni or Cu, has the capability to produce large area graphene. These preparation methods are described e.g. in Science 306, 666-669 (2004). However, requirements of high temperature, a sacrificial metal and multi-step transfer processes onto desired substrates, are the biggest obstacles for cost effective industrial-scale production of CVD grown graphene.

Chemical exfoliation of graphite based on Hummers method provides an alternative to produce solution dispersible graphene oxide (GO) and is described e.g. in Nat Nanotechnol 3, 270-274 (2008). However, this method requires thermal or chemical reduction and electronic properties can only be partially restored.

Other methods have been developed to overcome these limitations and to obtain high quality graphene such as, solvent and/or surfactant assisted liquid-phase exfoliation (as described e.g. in Nat Nanotechnol 3, 563-568 (2008)), electrochemical expansion (as described e.g. in JAm Chem Soc 133, 8888-8891 (2011)), and formation of graphite intercalated compounds (as described e.g. in Nat Nanotechnol 6, 439-445 (2011)). Nevertheless, these methods require extensive sonication which is limiting the size and yield of thin graphene layers.

Recently, electrochemical exfoliation of graphite has attracted much attention due to a simple and efficient way to produce high-quality graphene.

Adv Funct Mater 18, 1518-1525 (2008) describes the preparation of graphene by electrochemical exfoliation in an electrolyte containing ionic liquids.

US 2013/0001089 describes the preparation of graphene by electrochemical exfoliation using a carbon-based electrode and an aqueous electrolyte which may contain an acid such as $H_2SO_4$. Optionally, a base such as KOH and NaOH can be added. However, as can be seen from Examples 6 to 8 of US 2013/0001089, the graphene yield, based on the amount of the electrode carbon material, is quite low (less than 20 wt%) and other properties such as content of single-layer graphene, defect density, and/or hole mobility may still need further improvement.

It is an object of the present invention to provide an efficient electrochemical exfoliation process for preparing graphene at high yield and with a high content of single-layer graphene, while simultaneously keeping defect density of the prepared graphene as low as possible. Other relevant graphene properties such as flake size and hole mobility should be as high as possible.

The object is solved by a process for preparing graphene by electrochemical exfoliation, which comprises:

- providing a first electrode E1 and a second electrode E2, wherein at least the first electrode E1 comprises a carbon starting material having a layered structure,
- bringing at least the first electrode E1 in contact with a liquid electrolyte, wherein the liquid electrolyte comprises
    - an ammonium cation, and
    - an inorganic sulphur-containing anion,
- applying an electric potential between the first electrode E1 and the second electrode E2 so as to exfoliate graphene from the carbon starting material.

In the present invention, it was realized that the specific combination of ammonium cation and inorganic sulphur-containing anion improves efficiency of the electrochemical exfoliation process and provides high-quality graphene at high yield.

In the present application, the term "graphene" is not limited to a single layer graphene but also encompasses a multi-layer graphene having e.g. up to twenty graphene layers. As will be discussed below in further detail, it is possible with the electrochemical exfoliation process of the present invention to prepare a graphene material having a high content of single layer graphene. The overall graphene yield, based on the amount of the starting carbon material, is very high (e.g. 70 % or even higher). Furthermore, the graphene material obtainable by the process of the present invention has a very high carbon-to-oxygen ratio, a low number of defects, is easily dispersable in appropriate liquids and enables the preparation of high performance devices in different areas such as electronics, optoelectronics and energy-storage.

As indicated above, the first electrode E1 comprises a carbon starting material having a layered structure. Appropriate carbon materials from which graphene can be exfoliated are commonly known to the skilled person.

The carbon starting material having a layered structure can be e.g. a graphite, a chemically modified graphite such as a graphite oxide, an intercalated graphite, or a mixture thereof.

The graphite can be a natural graphite or a synthetic graphite. Exemplary graphite materials include a highly oriented pyrolytic graphite (HOPG), an expanded graphite, an intercalated graphite, or any combination thereof.

The carbon starting material, preferably graphite, can be provided in any form which is consistent with its use as an electrode material, e.g. in the form of flakes, a powder, fibers, foils, rods, a paste, or any combination thereof.

The electrode E1 can be e.g. a single graphite flake or many flakes held together. In the latter case, the flakes can be placed on a conductive surface, physically pressed together or held together using a binder such as a pyrolysed polymer (e.g. an extruded graphite rod).

The electrode E2 can be made of any material commonly known as an electrode material. The electrode E2 can be made of e.g. a metal such as Pt, Au, a conductive carbon material, ... etc. In principle, it is possible that the second electrode E2 also comprises a carbon material having a layered structure such as graphite or modified graphite.

As indicated above, at least the first electrode E1 is brought into contact with a liquid electrolyte, e.g. by immersing, either partly or completely, the electrode E1 in the liquid electrolyte.

Optionally, the second electrode E2 may also be brought into contact with the same liquid electrolyte, e.g. by immersing, either partly or completely, the electrode E2 in the liquid electrolyte. If so, both electrodes E1 and E2 are in contact with the same electrolyte.

Preferably, the liquid electrolyte is an aqueous electrolyte. In principle, the aqueous electrolyte may additionally comprise a polar solvent such as an alcohol. However, it is preferred that water represents the major part among the solvents being present in the electrolyte (e.g. more than 50 vol% or more than 75 vol%, based on the total volume of the solvents being present in the electrolyte).

In principle, pH of the liquid (preferably aqueous) electrolyte can vary over a broad range. The liquid electrolyte can be acidic, i.e. pH is less than 7 or less than 5 or even less than 3. Alternatively, the liquid electrolyte can be alkaline, i.e. pH is higher than 7 or higher than 8 or even higher than 9. According to a further alternative, the liquid electrolyte can have a pH of $7\pm2$ (i.e. 5 to 9) or $7\pm1$ (i.e. 6 to 8).

In the process of the present invention, it is also possible that the liquid electrolyte has a pH of from 1 to 10, more preferably 3 to 9 or 5 to 8 or 6 to 7.

As indicated above, the liquid electrolyte comprises an ammonium cation. In the present invention, the term "ammonium cation" refers to any cation which comprises at least one tetravalent nitrogen atom (i.e. a nitrogen atom bonded to 4 atoms) carrying a positive charge. The ammonium cation can be derived from any compound comprising an amine group by e.g. protonation or alkylation of the amine nitrogen atom. Preferably, the ammonium cation is derived from ammonia or an organic amine (e.g. a primary, secondary or tertiary $C_{1-4}$ alkyl amine) by protonation or alkylation (e.g. $C_{1-4}$ alkylation) of one or more nitrogen atoms.

In a preferred embodiment, the liquid electrolyte comprises an ammonium cation of formula (I)

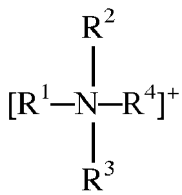

wherein each of the residues $R^1$, $R^2$, $R^3$ and $R^4$ bonded to the nitrogen atom is, independently from each other, hydrogen or $C_{1-4}$ alkyl. Preferably, each of the residues $R^1$, $R^2$, $R^3$ and $R^4$ is, independently from each other, hydrogen or $C_{1-2}$ alkyl.

Preferably, each of the residues $R^1$, $R^2$, $R^3$ and $R^4$ is, independently from each other hydrogen or $C_{1-2}$ alkyl, under the provision that at least one of the residues $R^1$, $R^2$, $R^3$ and $R^4$ is hydrogen.

If at least one of the residues $R^1$, $R^2$, $R^3$ and $R^4$ is hydrogen, the pH is preferably 8 or less, more preferably 7 or less, e.g. 5 to 8, or 6 to 7, or $7\pm1$.

Preferably, the ammonium cation is selected from $NH_4^+$, $[H_3NR^1]^+$, $[H_2NR^1R^2]^+$, $[HNR^1R^2R^3]^+$, or any mixture thereof, wherein $R^1$, $R^2$, $R^3$ and $R^4$ are, independently from each other $C_{1-4}$ alkyl, more preferably methyl or ethyl.

In a preferred embodiment, the ammonium cation is selected from $[H_3N(CH_3)]^+$, $[H_2N(CH_3)_2]^+$, $[HN(CH_3)_3]^+$, $[H_3N(C_2H_5)]^+$, or any mixture thereof.

As indicated above, the liquid electrolyte comprises an inorganic sulphur-containing anion.

Preferably, the inorganic sulphur-containing anion is selected from sulphate (i.e. $SO_4^{2-}$), hydrogen sulphate (i.e. $HSO_4^{2-}$), thiosulphate (i.e. $S_2O_3^{2-}$), sulphite (i.e. $SO_3^{2-}$), hydrogen sulphite ($HSO_3^-$), or any mixture thereof,

In a preferred embodiment, the ammonium cation is selected from $NH_4^+$, $[H_3NR^1]^+$, $[H_2NR^1R^2]^+$, $[HNR^1R^2R^3]^+$, $[NR^1R^2R^3R^4]^+$, or any mixture thereof, wherein $R^1$, $R^2$, $R^3$ and $R^4$ are, independently from each other methyl or ethyl, and the sulphur-containing anion is sulphate or hydrogensulphate.

According to another preferred embodiment, the ammonium cation is selected from $NH_4^+$, $[H_3NR^1]^+$, $[H_2NR^1R^2]^+$, $[HNR^1R^2R^3]^+$, $[NR^1R^2R^3R^4]^+$, or any mixture thereof, wherein $R^1$, $R^2$, $R^3$ and $R^4$ are, independently from each other methyl or ethyl, and the sulphur-containing anion is sulphite or hydrogensulphite.

According to another preferred embodiment, the ammonium cation is selected from $NH_4^+$, $[H_3NR^1]^+$, $[H_2NR^1R^2]^+$, $[HNR^1R^2R^3]^+$, $[NR^1R^2R^3R^4]^+$, or any mixture thereof, wherein $R^1$, $R^2$, $R^3$ and $R^4$ are, independently from each other methyl or ethyl, and the sulphur-containing anion is thiosulphate.

The concentration of the ammonium cation and the sulphur-containing anion, respectively, can vary over a broad range. Preferably, the ammonium cation and/or the inorganic sulphur-containing anion is/are present in the liquid electrolyte at a concentration of from 0.001 to 10 mol/l, more preferably 0.01 mol/l to 5 mol/l, or 0.05 to 2 mol/l. These concentration values may refer to the concentration of the ammonium cation and/or the inorganic sulphur-containing anion at the beginning of the electrochemical exfoliation process and may change during the process. It is also possible that the concentration of the ammonium cation and/or the inorganic sulphur-containing anion is within the ranges indicated above until completion of the electrochemical exfoliation process, if necessary by adding further ammonium cations and/or the inorganic sulphur-containing anions during the process.

The liquid (preferably aqueous) electrolyte can be obtained by at least partly dissolving a salt comprising the ammonium cation and the inorganic sulphur-containing anion in a solvent, preferably in water. Alternatively, the liquid (preferably aqueous) electrolyte can be obtained by adding to a solvent, preferably water, an acid which provides upon deprotonation the inorganic sulphur-containing anion and an amine which provides upon protonation the ammonium cation. The acid and the amine can be added simultaneously or one after the other (e.g. the amine first and then the acid, or *vice versa*).

The liquid electrolyte may contain one or more additives such as a surfactant, a dispersant, an oxidant, a buffering agent, or any mixture thereof. Alternatively, it is possible that the liquid electrolyte does not contain one or more of these additives, e.g. does not contain a surfactant and/or a dispersant.

If present, one or more of these additives may already be added at the beginning of the electrochemical exfoliation process or may alternatively be added at a later stage (i.e. when the electrochemical exfoliation of graphene has already started or even after completion of the electrochemical exfoliation of graphene). So, in principle, it is also possible in the process of the present invention that the liquid electrolyte does not contain a dispersant and/or a surfactant when the electrochemical exfoliation process is started, and a dispersant and/or a surfactant is/are added to the liquid electrolyte during the electrochemical exfoliation of graphene and/or after completion of the electrochemical exfoliation of graphene (e.g. for stabilizing the exfoliated graphene layers).

As indicated above, an electric potential is applied between the first electrode E1 and the second electrode E2 so as to exfoliate the graphene from the carbon starting material.

Based on common general knowledge, the skilled person is able to select an electric potential which is high enough for initiating exfoliation and thereby separating graphene layers from the carbon starting material.

Whether or not exfoliation has been initiated can be verified e.g. by detecting morphological changes in the electrode E1 and/or detecting graphene which has been exfoliated from the electrode E1 into the liquid electrolyte.

The electric potential applied between the first electrode E1 and the second electrode E2 can vary over a broad range and is typically in the range of from 0.01 V to 200 V, more preferably 0.05 V to 20 V or 0.1 V to 15 V.

In principle, any power or voltage source commonly known to the skilled person can be used for applying the electric potential between the electrodes E1 and E2.

Preferably, the electric potential is high enough for at least temporarily generating a gas at the electrode E1 and/or the electrode E2. Whether or not a gas is generated at an electrode can easily be detected (e.g. formation of gas bubbles at the electrode surface).

It can be preferred to increase or adjust the electric potential to a value which is high enough for at least temporarily generating hydrogen gas and hydroxyl ions at the electrode E2.

As known to the skilled person, hydrogen gas and hydroxyl ions can be generated according to the following reaction scheme:

$$2H_2O + 2e^- \rightarrow H_2 + 2OH^-$$

Although being generated at the electrode E2, this may assist the intercalation of compounds into the layered carbon starting material at the electrode E1 and thereby improve efficiency of the exfoliation process.

Optionally, it can also be preferred to increase or adjust the electric potential to a value which is high enough for at least temporarily generating oxygen gas at the electrode E1. As known to the skilled person, oxygen gas can be generated according to the following reaction scheme:

$$2H_2O \rightarrow O_2 + 4H^+ + 4e^-$$

Generation of oxygen gas may improve separation of graphene layers from the layered carbon starting material which in turn improves efficiency of the exfoliation process.

During the electrochemical exfoliation, the polarity of the electric potential can be changed, either periodically or non-periodically. Alternatively, it is also possible that the polarity of the electric potential does not change during the electrochemical exfoliation.

Preferably, a positive voltage is applied to the first electrode E1 (i.e. E1 represents the anode), either temporarily or throughout the entire electrochemical exfoliation process. If the positive voltage is not applied throughout the entire electrochemical exfoliation process to the electrode E1, a positive voltage and a negative voltage can alternately be applied to the first electrode E1.

Preferably, the graphene exfoliated from the carbon starting material during the electrochemical exfoliation process (i.e. the exfoliated graphene) is separated from the liquid electrolyte.

The graphene can be separated from the liquid electrolyte by methods commonly known to the skilled person, such as filtration (e.g. vacuum filtration), centrifugation, sedimentation, sieving, or any combination thereof.

If needed, the graphene separated from the liquid electrolyte can be subjected to one or more additional treatment steps such as a thermal treatment (e.g. for drying, thermal annealing, ... etc.), chemical doping (e.g. by treatment with $HNO_3$, or gas species such as $N_2 + H_2$, $NH_3$, $SOCl_2$ etc.), freeze drying, chemical functionalization, chemical reduction or oxidation, microwave treatment, washing, or any combination thereof.

According to a further aspect, the present invention provides a graphene which is obtainable by the process described above.

Preferably, the graphene has a carbon to oxygen atomic ratio of at least 10, more preferably at least 13, even more preferably at least 15. The carbon to oxygen atomic ratio can be determined by X-ray photoelectron spectroscopy.

Typically, the exfoliated graphene obtainable by the process of the present invention is in the form of flakes. Preferably, at least 50%, more preferably at least 60% or at least 70% of the graphene flakes are either single-layer graphene flakes or bi-layer graphene flakes. The relative amount of single-layer and bi-layer graphene flakes can be measured by atomic force microscopy (AFM).

Preferably, at least 60%, more preferably at least 70% of the graphene flakes have a size of at least 2 $\mu m$. Size of a graphene flake is measured by scanning electron microscopy (SEM) and relates to the largest dimension of the flake shown on the SEM image.

According to a further aspect, the present invention relates to a process for preparing a graphene dispersion, which comprises:

- preparing graphene by the electrochemical exfoliation as described above, and
- dispersing the graphene in a liquid dispersant medium.

With regard to the properties of the graphene, reference can be made to the statements provided above.

Appropriate liquids that can be used in a liquid dispersant medium are commonly known to the skilled person.

Preferably, the liquid dispersant medium comprises or consists of one or more organic liquids. An aqueous dispersant medium can be used as well.

Preferred organic liquids that can be mentioned are e.g. N,N'-dimethylformamide, N-methyl or ethyl pyrrolidone, alcohols (e.g. $C_{1-4}$ alcohols such as methanol, ethanol or propanol), tetrahydrofuran (THF), acetonitrile, dimethyl sulfoxide (DMSO), ketones, or any mixture thereof. These organic liquids can also be used together with water in a water/organic solvent mixture.

Optionally, the liquid dispersant medium may contain additives such as surfactants, binders, and/or dispersants. However, due to the high dispersion stability (i.e. low aggregation tendency), it is also possible that the graphene dispersion does not contain any surfactant and/or binder and/or dispersant.

For assisting the dispersion step, the graphene can be dispersed in the liquid dispersant medium under sonication, shaking, or stirring or combinations thereof. Appropriate sonication conditions and devices are commonly known to the skilled person.

The amount of graphene dispersed in the liquid dispersant medium can vary over a broad range. Typically, the liquid dispersant medium contains the graphene in an amount of from 0.001 wt% to 2.0 wt%, more preferably 0.01 wt% to 1.0 wt%.

According to a further aspect, the present invention relates to a graphene dispersion in a liquid dispersant medium, obtainable by the process described above.

According to a further aspect, the present invention relates to a process for preparing a layered assembly, comprising

- preparing a graphene by the electrochemical exfoliation as described above or a graphene dispersion as described above,
- applying the graphene or the graphene dispersion on a substrate so as to form a graphene film.

The graphene or graphene dispersion can be applied onto the substrate by film-forming methods commonly known to the skilled person. Exemplary methods include e.g. Langmuir-Blodgett technique, dip-coating, spin-coating, printing, painting (e.g. brush painting), dry transfer technique (e.g. providing the graphene on a temporary substrate (e.g. by filtration) and then transferring the graphene to the substrate of the layered assembly), self-assembly on appropriate surfaces (e.g. SAM modified), dielectrophoresis, electrodeposition (e.g. for conductive substrates or electrodes), or any combination thereof.

Substrates on which graphene can be applied are known to the skilled person. In principle, any substrate which is compatible with graphene can be used. Preferably, the substrate should also be a material which is compatible with the intended final use such as supercapacitor applications. However, it is also possible to provide the graphene film on a temporary substrate first, and subsequently transferring the graphene film to a different substrate, which may then become part of the final device.

The substrate can be chosen from a broad variety of different materials. The substrate can be rigid but may also be flexible (e.g. in the form of a foil). Appropriate substrates include e.g. metals (such as copper, platinum, nickel, titanium, and alloys thereof), semiconductors (such as silicon, in particular silicon wafers), inorganic substrates (such as oxides, e.g. $SiO_2$, glass, HOPG, mica, or any combination thereof), flexible substrates that may be made of e.g. polymers such as polyethylene terephthalate, polyethylene naphthalate, polymethyl methacrylate, polypropylene adipate, polyimide, polyolefins, or combinations or blends thereof.

The substrate can be porous or non-porous.

The substrate can be a flexible substrate such as a paper substrate, a polymer foil substrate, a metal foil substrate, or any mixture or combination thereof. For some applications, it might be preferred to have a flexible and porous substrate.

Preferably, the layered assembly is part of an electronic device, an optoelectronic device, a composite material, or an energy-storage device.

The layered assembly can be part of a transistor such as a field-effect transistor, a capacitor such as a supercapacitor, or an electrode (e.g. a flexible electrode, in particular a transparent flexible electrode).

The present invention is illustrated in further detail by the following Examples.

Examples

Characterization of the prepared samples

The morphology and structure of the samples were investigated by SEM (Gemini 1530 LEO), AFM (Veeco Dimension 3100), HRTEM and SAED (Philips Tecnai F20), XRD (Bruker D4 X-ray scattering system with Ni-filtered Cu K$\alpha$ radiation). Raman spectra and mapping was recorded with Bruker RFS 100/S spectrometer (laser wavelength 532 nm). The XPS measurements were carried out using ESCA 200 spectrometer in ultrahigh vacuum (base pressure $10^{-10}$ mbar). The measurement chamber was equipped with a monochromatic Al (K$\alpha$) x-ray source. The work function of exfoliated graphene ("EG") was measured by UPS (ESCA 200 spectrometer) with a He discharge lamp providing photon energy of 21.22 eV. The work function was calculated using the equation, $\Phi = hv - E_F + E_{cutoff}$, where hv, $E_F$ and $E_{cutoff}$ are the photon energy of the excitation light, the Fermi level edge and the measured secondary electron cutoff. The sheet resistances of EG films were measured with a four-point-probe system using a Keithly 2700 multimeter (probe spacing: 0.635 mm, $R_s$ = 4.532 V/I).

**Example 1: Electrochemical exfoliation of graphite and preparing a graphene dispersion**

Natural graphite flakes were used as a carbon electrode E1 (*i.e.* anode) for electrochemical exfoliation of graphite. The graphite flakes were adhered on a conductive carbon tape to form a pellet. A platinum wire was used as a cathode (i.e. electrode E2). The electrolyte for the exfoliation was prepared by dissolving 1.06 g of ammonium sulfate ($(NH_4)_2SO_4$) in 80 ml of water (*i.e.* 0.1 M). The aqueous electrolyte had a pH of about 6.5 to 7.0. The distance between the graphite and the Pt electrode was -2 cm and was kept constant throughout the electrochemical process. The electrochemical exfoliation was carried out by applying positive voltage of +10 V on the graphite electrode. After the exfoliation of graphite was completed, the product was then collected through a polytetrafluoroethylene (PTFE) membrane filter with 0.2 $\mu$m pore size and washed several times with DI water by vacuum filtration.

The resultant exfoliated graphene (EG) was then dispersed in N,N'-dimethylformamide (DMF) by sonication at low power for 10 min. A dispersion of 2.5 mg graphene per ml DMF was stable for weeks without any significant

aggregation.

The yield of exfoliated graphene was about 70 %, based on the amount of the starting graphite.

Measuring via SEM the lateral size over 120 exfoliated graphene flakes showed that over 80% of the graphene flakes were larger than 5.0 μm. This is illustrated in Figure 1.

As determined via AFM measurements, the exfoliated graphene prepared in Example 1 has a very high amount of single-layer graphene (about 35%) and bi-layer graphene (about 37%). This is illustrated in Figure 2.

Raman spectroscopy measurements and mapping were made with a 532 nm excitation laser on exfoliated graphene deposited on $SiO_2$/Si substrates. The Raman spectrum is shown in Figure 3. The intensity ratio of the D peak to the G peak ($I_D/I_G$) is 0.25, which is a very low value and indicates a very low defect density. The D peak (- 1350 $cm^{-1}$) is caused by the breathing mode of $sp^2$ carbon atom and activated by the existence of some defects such as edges, functional groups or structural disorders.

X-ray photoelectron spectroscopy (XPS) was used to investigate the chemical composition of the exfoliated graphene. The XPS spectrum is shown in Figure 4. The exfoliated graphene prepared in Example 1 had an oxygen content of about 5.5 at% and an atomic carbon to oxygen ratio (C/O) of about 17.2. So, with the process of the present invention, it is possible to obtain a graphene with a very low oxygen content.

The resultant exfoliated graphene (EG) was then dispersed in N,N'-dimethylformamide (DMF) by sonication at low power for 10 min. A dispersion of 2.5 mg graphene per ml DMF was stable for weeks without any significant aggregation.

**Comparative Examples 1 to 3**

The electrochemical exfoliation process described above was repeated but ammonium sulphate was replaced by the following salts:

Comparative Example 1: Ammonium chloride (i.e. $NH_4Cl$)

Comparative Example 2: Sodium nitrate (i.e. $NaNO_3$)

Comparative Example 3: Sodium chlorate (i.e. $NaClO_4$)

The results are summarized in the following Table:

| Salt in the electrolyte | Electrolyte concentration (M) | Voltage applied to the graphite electrode | Results |
|---|---|---|---|
| $NH_4Cl$ | 0.1 | +10 V | No exfoliation |
| $NaNO_3$ | 0.1 | +10 V | Poor exfoliation. Product yield very low. |
| $NaClO_4$ | 0.1 | +10 V | No exfoliation. |

**Example 2: Fabrication of field-effect transistors (FET)**

For testing the electronic properties of the as-prepared exfoliated graphene flakes, FET devices based on thin exfoliated graphene film (thickness -0.5 to 4 nm) and a single layer exfoliated graphene sheet (- 0.71 nm) were fabricated. Both, thin exfoliated graphene film and isolated single layer exfoliated graphene on $SiO_2$/Si substrates were prepared by Langmuir-Blodgett (LB) method.

The films of exfoliated graphene for FETs fabrications were prepared by Langmuir-Blodgett (LB) assembly. Briefly, the dispersion of exfoliated graphene (-0.2 mg/mL) in 1:3 DMF/chloroform mixture was carefully dropped on the water surface using a 100 μL glass syringe. Drop wise addition of 3 mL of exfoliated graphene dispersion resulted in a faint black colored film on water surface. Afterwards, the film was compressed by LB trough barriers and the surface pressure was monitored by a tensiometer. The film was collected by vertically dip-coating $SiO_2$ (300 nm) substrates. The resulting samples were annealed at 200 °C for 30 min under vacuum to evaporate residual solvents.

To fabricate single exfoliated graphene flake based FETs, 100 nm thick Pt was deposited by focused ion-beam (FIB) to connect the isolated flake with Au source/drain (S/D) electrodes.

The hole carrier mobility was calculated from the linear regime of the transfer curves using the following equation:

$$\mu = (L/WC_i V_d) \times (\Delta I_d/\Delta V_g)$$

where $C_i$ is the capacitance of dielectric (11 nF/cm$^2$), and L and *W* are channel length and width, respectively.

The sheet resistance ($R_s$) of the single exfoliated graphene flake was measured by a two point probe method on the same device and the value was obtained by using the equation, $R_s = RW/L$, where '*R*' is the resistance at 0.5 V, '*W*' is the width of exfoliated graphene flake and '*L*' is the channel length. All the device measurements were carried out with a Keithly SCS 4200 semiconductor characterization system inside a glove box filled with nitrogen.

The transfer curves of the FET devices based on exfoliated graphene thin film and single layer are shown in Figure 5 and 6, respectively. In the top right of the graph of Figure 5, the structure of the FET device based on an exfoliated graphene thin film is schematically shown. The structure comprises a p-Si/$SiO_2$ substrate on which the exfoliated graphene ("EG") and the drain D as well as the source S are applied. In the top right of the graph of Figure 6, a SEM image of the device based on the single layer graphene is shown. The device based on thin exfoliated graphene film (Figure 5) shows a maximum hole mobility of 98.2 cm$^2$ Vs$^{-1}$, while single-layer graphene (Figure 6) delivers a hole mobility of ~310 cm$^2$ Vs$^{-1}$. The lower mobility of the thin film compared to single-layer exfoliated graphene is mainly attributed to the interjunction resistance between exfoliated graphene flakes. Nevertheless, the hole mobility values of both thin exfoliated graphene film and single-layer exfoliated graphene achieved in this work are very high, thereby indicating the high performance level of the graphene prepared by the electrochemical exfoliation method of the present invention.

**Example 3: Preparation of a transparent conducting electrode**

Transparent graphene films on flexible PET substrates were fabricated by a vacuum filtration and dry transfer method. An exfoliated graphene dispersion of 0.1 mg/mL in DMF was vacuum filtered through a polytetrafluoroethylene (PTFE) membrane followed by mechanically pressing the filtered film against a PET substrate. Afterwards, the PTFE membrane was peeled off, leaving the transferred exfoliated graphene film on the substrate due to van der Waals interaction between the substrate and graphene. The thickness of the transferred exfoliated graphene film can be adjusted via the controlling of filtration volume and the concentration of exfoliated graphene dispersions. For instance, vacuum filtration of 3 and 9 mL of exfoliated graphene dispersion resulted in - 6.0 and - 16.0 nm graphene films on substrates, respectively.

The exfoliated graphene films after transfer showed an average sheet resistance ($R_s$) of 24.20 and 7.56 kΩ □$^{-1}$ for - 6.0 and - 16.0 nm films, respectively. After annealing at relatively low temperature (i.e. 300 °C), the $R_s$ dropped significantly to 7.61 and 1.81 kΩ □$^{-1}$, respectively. Sheet resistance as a function of temperature is shown in Figure 7. The resistance of graphene films was measured using a four-point probe system.

Moreover, the transmittance of - 6.0 and - 16.0 nm thick and conductive exfoliated graphene films was - 91.0 and - 79.90% at a wavelength of 550 nm, respectively. Transmittance as a function of wavelength is shown in Figure 8.

**Example 4: Preparation of a conductive paper using a "graphene ink"**

To form graphene-ink, 1 g of exfoliated graphene powder was dispersed in 100 mL of DMF (conc. 10 mg/mL) followed by sonication for 20 min. The prepared exfoliated graphene dispersion was then brush painted on commercial A4 size paper acting as a porous substrate. The paper was then dried at 120 °C for 2-3 min. The brush painting and drying process was repeated several times. The sheet resistance of conductive paper was measured by four-point-probe system and bending test was carried out.

The porous nature of the paper substrate provides strong capillary force for the exfoliated graphene ink by absorbing the solvent and leading to a conformal coating of exfoliated graphene ink on paper, transforming the paper into an electrically conductive film. Moreover, a simple film adhesion test with a Scotch tape demonstrates the strong adhesion between exfoliated graphene and paper, confirming high film stability against damage, such as scratching or peeling off.

A very low sheet resistance of ~11 Ω □$^{-1}$ was obtained with an exfoliated graphene loading of 0.74 mg cm$^{-2}$.

The conductive paper also showed excellent mechanical properties and can be bent down to 4 mm radius without any significant change in electrical conductivity. Figure 9 shows the changes in sheet resistance ($R_0$: Sheet resistance at no bending; R: Sheet resistance measured at a specific bending radius) after bending the conductive paper into different radii. On the bottom right of the graph of Figure 9, a photograph of the bended conductive paper is shown.

**Example 5: Preparing a solid state flexible supercapacitor**

To demonstrate the multifunctionality of exfoliated graphene paper, we have explored the potential of exfoliated graphene paper for all solid-state flexible supercapacitors. For this purpose, a polyvinyl alcohol (PVA)/$H_2SO_4$ gel was carefully drop-casted on the top surface of exfoliated graphene coated paper (with a loading of ~ 0.60 mg $cm^{-2}$) and solidified overnight. Afterwards, two pieces of exfoliated graphene paper electrodes were integrated into one all solid-state supercapacitor. It is noteworthy that the supercapacitor device was fabricated without any additional current collector.

The electrochemical properties of as-fabricated device were investigated by means of cyclic voltammetry. Figures 10 and 11 show current density as a function of voltage for different scan rates. Figure 12 shows area capacitance as a function of scan rate.

As shown in Figure 10, the binder- and additive-free fabricated exfoliated graphene electrode based supercapacitor exhibited a typical double-layer capacitive behavior at various scan rates. The area capacitances of the fabricated device were 2.8 mF $cm^{-2}$ at a scan rate of 1 mV $s^{-1}$ (Figure 12). Remarkably, the device exhibits high rate capability which allows for operation as high as 5000 mV $s^{-1}$, as shown by Figure 11. This extremely high performance level can be attributed to the high-quality and high conductivity of the as-prepared exfoliated graphene film.

## Claims

1. A process for preparing graphene by electrochemical exfoliation, which comprises:

    - providing a first electrode E1 and a second electrode E2, wherein at least the first electrode E1 comprises a carbon starting material having a layered structure;
    - bringing at least the first electrode E1 in contact with a liquid electrolyte, wherein the liquid electrolyte comprises

        - an ammonium cation, and
        - an inorganic sulphur-containing anion,

    - applying an electric potential between the first electrode E1 and the second electrode E2 so as to exfoliate graphene from the carbon starting material.

2. The process according to claim 1, wherein the carbon starting material having a layered structure is selected from graphite, chemically modified graphite, or any mixture thereof; and/or the liquid electrolyte is an aqueous electrolyte.

3. The process according to claim 1 or 2, wherein the liquid electrolyte has a pH of from 1 to 10; and/or the ammonium cation and/or the inorganic sulphur-containing anion is/are present in the liquid electrolyte at a concentration of from 0.001 to 10 mol/l.

4. The process according to one of the preceding claims, wherein the ammonium cation is derived from ammonia, a primary, a secondary or a tertiary $C_{1-4}$ alkyl amine by protonation or alkylation.

5. The process according to one of the preceding claims, wherein the ammonium cation has the following formula (I)

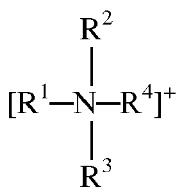

(I)

wherein each of the residues $R^1$, $R^2$, $R^3$ and $R^4$ bonded to the nitrogen atom is, independently from each other, hydrogen or $C_{1-4}$ alkyl.

6. The process according to claim 5, wherein each of the residues $R^1$, $R^2$, $R^3$ and $R^4$ in Formula (I) is, independently from each other hydrogen or $C_{1-2}$ alkyl, under the provision that at least one of the residues $R^1$, $R^2$, $R^3$ and $R^4$ is hydrogen.

7. The process according to one of the preceding claims, wherein the inorganic sulphur-containing anion is selected from sulphate, hydrogen sulphate, thiosulphate, sulphite, hydrogen sulphite, or any mixture thereof.

8. The process according to one of the preceding claims, wherein the electric potential applied between the first electrode E1 and the second electrode E2 is in the range of from 0.01 to 200V.

9. The process according to one of the preceding claims, wherein the polarity of the electric potential is not changed during the electrochemical exfoliation.

10. The process according to one of the claims 1 to 8, wherein the polarity of the electric potential is changed during the electrochemical exfoliation.

11. A graphene, obtainable by the electrochemical exfoliation process according to one of the claims 1 to 10.

12. The graphene according to claim 11, having a carbon to oxygen atomic ratio of at least 10.

13. The graphene according to claim 11 or 12, wherein the graphene is in the form of flakes and at least 50% of the graphene flakes are either single-layer graphene flakes or bi-layer graphene flakes, and/or at least 60% of the graphene flakes have a size of at least 2 μm.

14. A process for preparing a graphene dispersion, which comprises:

- preparing a graphene by the electrochemical exfoliation process according to one of the claim 1 to 10, and
- dispersing the graphene in a liquid dispersant medium.

15. A graphene dispersion, obtainable by the process according to claim 14.

16. A process for preparing a layered assembly, comprising

- preparing a graphene by the process according to one of the claims 1 to 10 or a graphene dispersion according to the process of claim 14,
- applying the graphene or the graphene dispersion on a substrate so as to form a graphene film.

17. The process according to claim 16, wherein the layered assembly is part of an electronic device, an optoelectronic device, a composite material, or an energy-storage device.

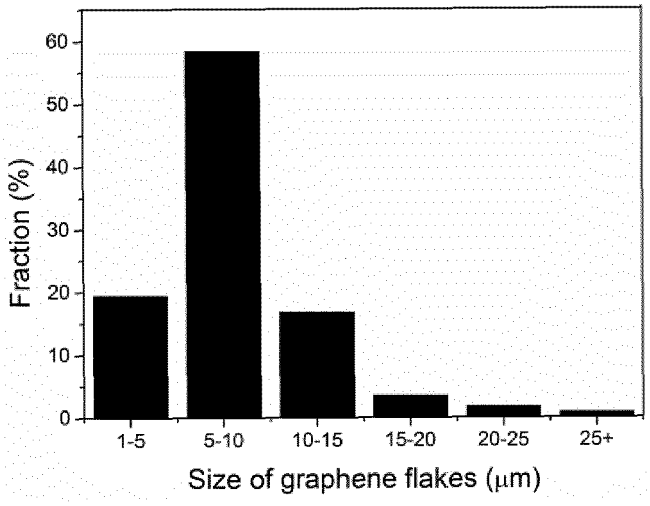


Figure 1

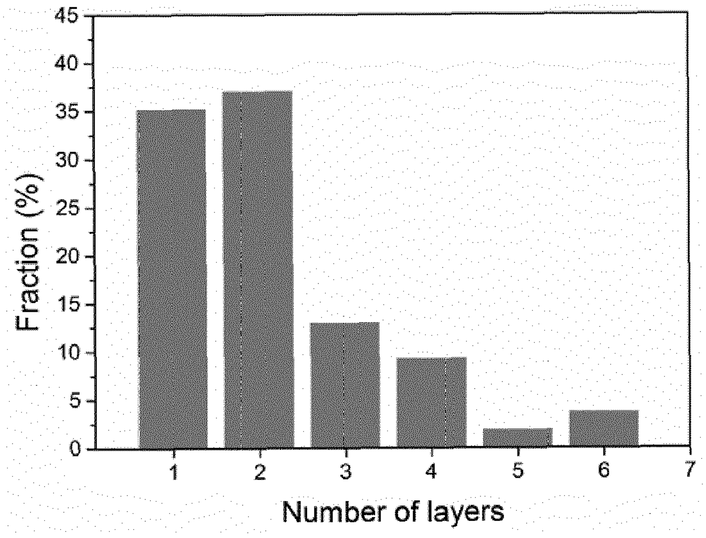


Figure 2

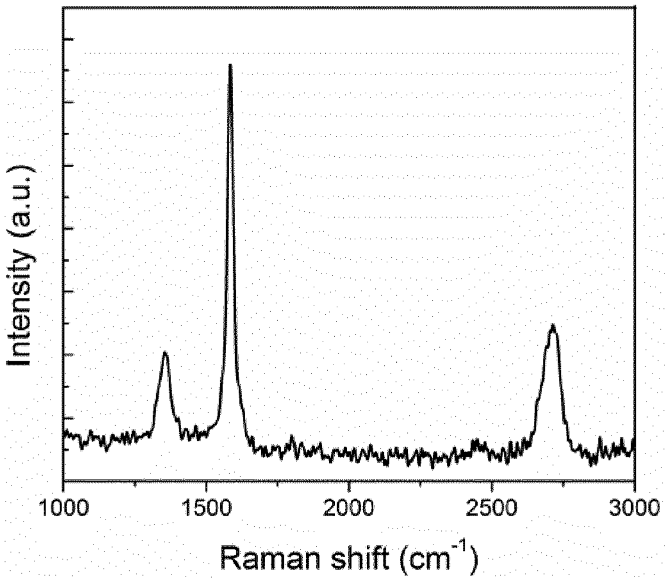


Figure 3

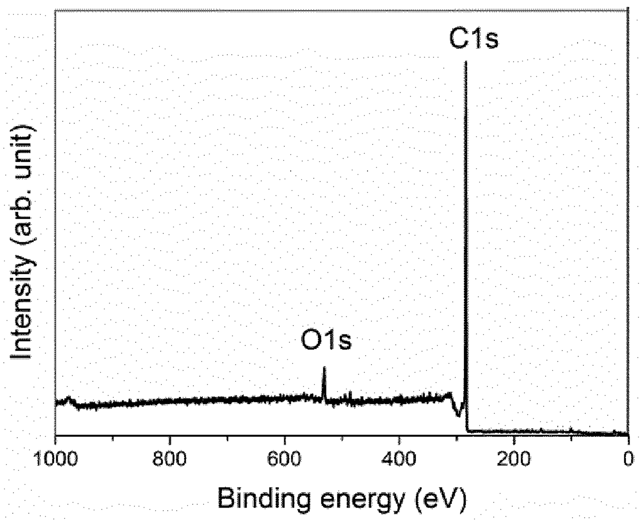


Figure 4

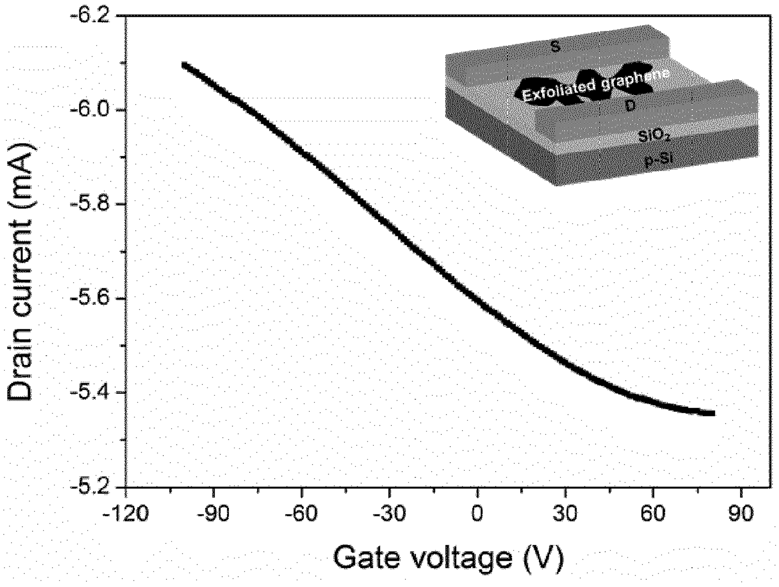


Figure 5

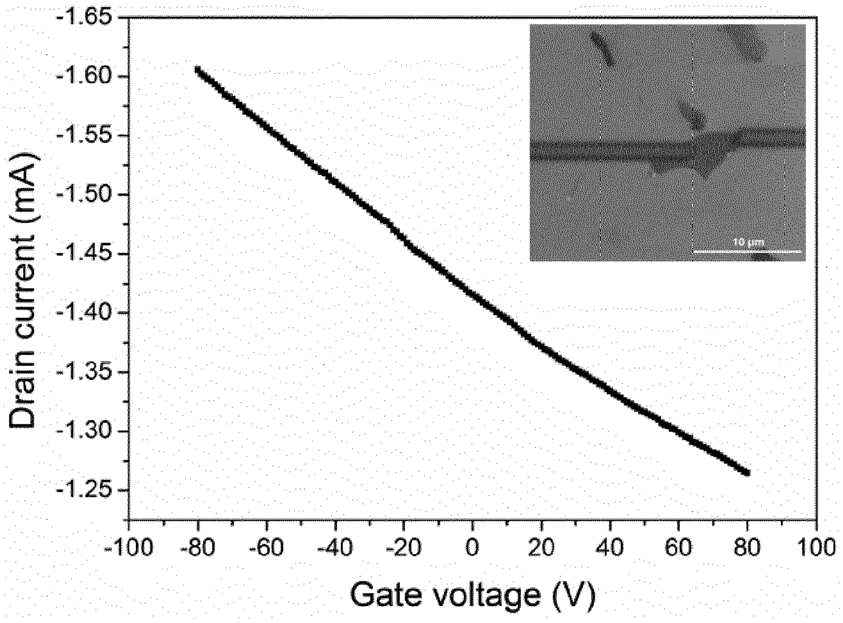


Figure 6

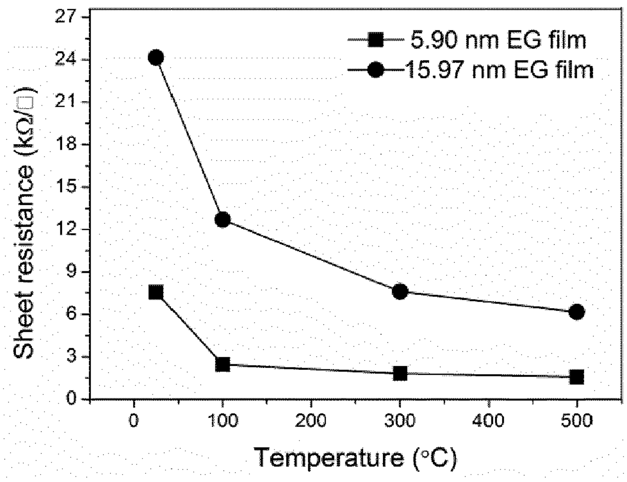


Figure 7

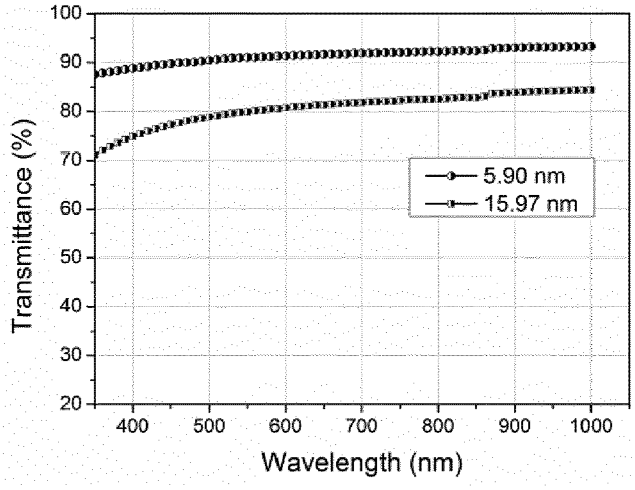


Figure 8

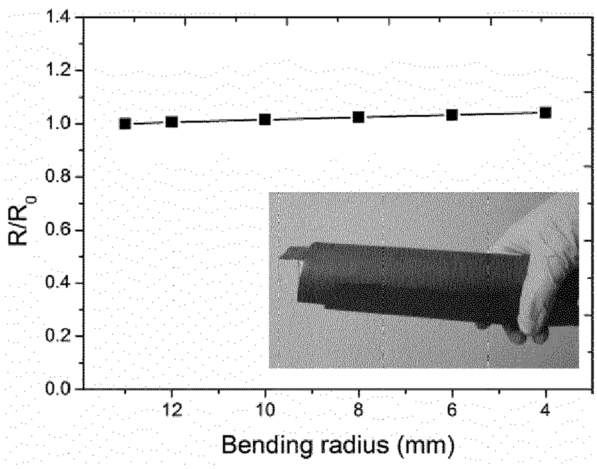


Figure 9

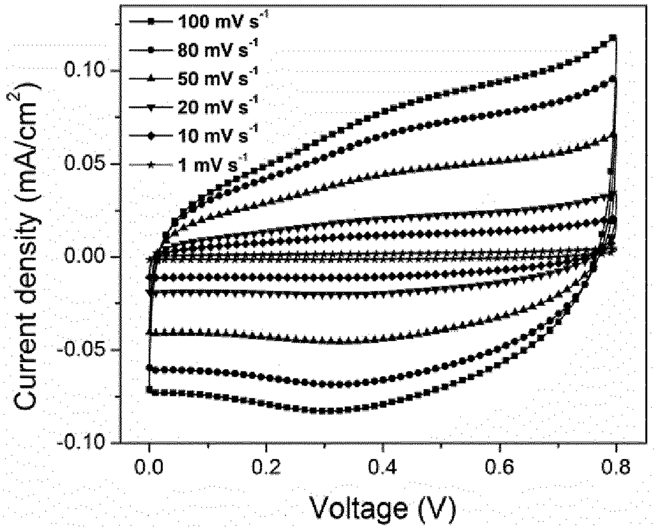


Figure 10

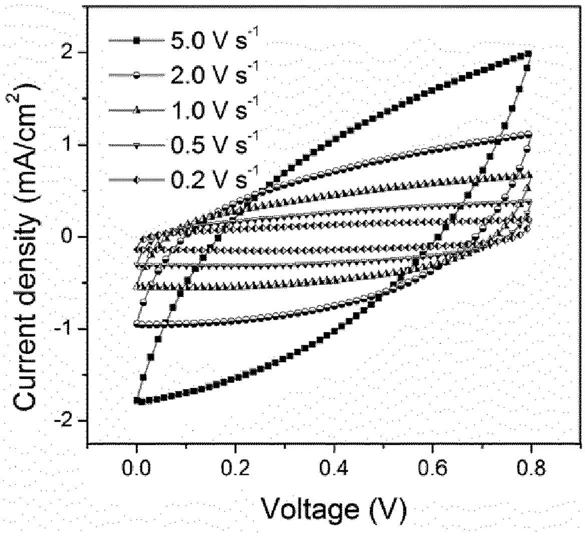


Figure 11

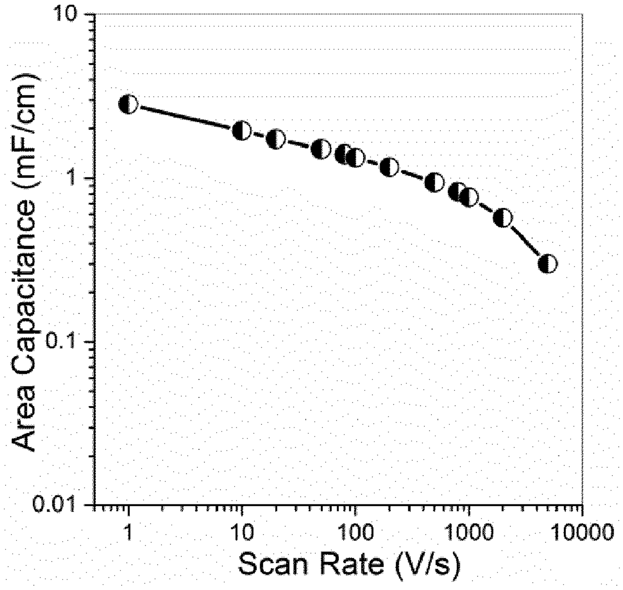
Area Capacitance (mF/cm)
10
1
0.1
0.01
1
10
100
1000
10000
Scan Rate (V/s)

Figure 12

Europäisches Patentamt
European Patent Office
Office européen des brevets

# EUROPEAN SEARCH REPORT

Application Number
EP 13 19 4792

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 1 186 727 A (DOW CHEMICAL CO [US]) 2 April 1970 (1970-04-02) * page 1, left-hand column, line 33 - page 1, right-hand column, line 70; example 2; tables II, run 10 * | 1-9 | INV. C25B1/00 C01B31/04 |
| X | KHALED PARVEZ ET AL: "Electrochemically Exfoliated Graphene as Solution-Processable, Highly Conductive Electrodes for Organic Electronics", ACS NANO, vol. 7, no. 4, 23 April 2013 (2013-04-23), pages 3598-3606, XP055115862, ISSN: 1936-0851, DOI: 10.1021/nn400576v | 11-17 | |
| A | * the whole document * | 1-10 | |
| X | WO 2012/120264 A1 (UNIV MANCHESTER [GB]; DRYFE ROBERT ANGUS WILLIAM [GB]; KINLOCH IAN ANT) 13 September 2012 (2012-09-13) | 11-17 | |
| A | * the whole document * | 1-10 | |

TECHNICAL FIELDS SEARCHED (IPC)

C25B
C01B

The present search report has been drawn up for all claims

1

| Place of search | Date of completion of the search | Examiner |
|---|---|---|
| Munich | 30 April 2014 | Hammerstein, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT ON EUROPEAN PATENT APPLICATION NO.** EP 13 19 4792

This annex lists the patent family members relating to the patent documents cited in the above-mentioned European search report. The members are as contained in the European Patent Office EDP file on
The European Patent Office is in no way liable for these particulars which are merely given for the purpose of information.

30-04-2014

| Patent document cited in search report | Publication date | Patent family member(s) | Publication date |
|---|---|---|---|
| GB 1186727 A | 02-04-1970 | NONE | |
| WO 2012120264 A1 | 13-09-2012 | EP 2683652 A1 | 15-01-2014 |
| | | US 2014061059 A1 | 06-03-2014 |
| | | WO 2012120264 A1 | 13-09-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20130001089 A


### Non-patent literature cited in the description


- *Science,* 2004, vol. 306, 666-669
- *Nat Nanotechnol,* 2008, vol. 3, 270-274
- *Nat Nanotechnol,* 2008, vol. 3, 563-568
- *JAm Chem Soc,* 2011, vol. 133, 8888-8891
- *Nat Nanotechnol,* 2011, vol. 6, 439-445
- *Adv Funct Mater,* 2008, vol. 18, 1518-1525